# EUROPÄISCHE PATENTSCHRIFT

(11) **EP 1 165 877 B1**
(45) Veröffentlichungstag und Bekanntmachung des Hinweises auf die Patenterteilung: **05.11.2003**
(21) Anmeldenummer: 00916853.5
(22) Anmeldetag: 21.02.2000
(51) Int. Cl.: D06N 7/00, C09J 125/10

(54) **HERSTELLUNG EINES MEHRLAGIGEN, TEXTILEN BODENBELAGS UNTER VERWENDUNG EINER WÄSSRIGEN POLYMERDISPERSION ALS KLEBSTOFF**
PRODUCTION OF A MULTILAYERED, TEXTILE FLOOR COVERING USING AN AQUEOUS POLYMERIC DISPERSION AS ADHESIVE
FABRICATION D'UN REVETEMENT DE SOL TEXTILE MULTICOUCHE A L'AIDE D'UNE DISPERSION POLYMERE AQUEUSE EN TANT QU'ADHESIF

(30) Priorität: 05.03.1999 DE 19909819
(43) Veröffentlichungstag der Anmeldung: 02.01.2002
(73) Patentinhaber: BASF AKTIENGESELLSCHAFT, 67056 Ludwigshafen (DE)
(72) Erfinder: SMITH, James, Arthur, NL-6836 LC Arnhem (NL); SCHOTT, Bernard, F-67410 Drusenheim (FR); AAN DE MEULEN, Leonardus, NL-6987 DC Giesbeek (NL)
(86) Internationale Anmeldenummer: EP0001411
(87) Internationale Veröffentlichungsnummer: WO00053842

(56) Entgegenhaltungen:
- EP-A- 0 753 404
- WO-A-96/22414
- US-A- 5 403 884
- DATABASE WPI Section Ch, Week 198905 Derwent Publications Ltd., London, GB; Class A18, AN 1989-037290 XP002143845 & JP 63 312376 A (SUMITOMO NAUGATUCK KK), 20. Dezember 1988 (1988-12-20)
- DATABASE WPI Section Ch, Week 198342 Derwent Publications Ltd., London, GB; Class A18, AN 1983-791719 XP002143846 & JP 58 152037 A (SUMITOMO CHEM CO LTD), 9. September 1983 (1983-09-09)
- DATABASE WPI Section Ch, Week 198316 Derwent Publications Ltd., London, GB; Class A12, AN 1983-37966K XP002143847 & JP 58 041972 A (SUMITOMO CHEM CO LTD), 11. März 1983 (1983-03-11)
- DATABASE WPI Section Ch, Week 198111 Derwent Publications Ltd., London, GB; Class A18, AN 1981-18332D XP002143848 & JP 56 004673 A (SHOWA DENKO KK), 19. Januar 1981 (1981-01-19)

## Beschreibung

Die Erfindung betrifft mehrlagig aufgebaute textile Bodenbeläge, ein Verfahren zur Herstellung des mehrlagigen Bodenbelags sowie einen Klebstoff, der für die Herstellung der Bodenbeläge geeignet ist.

Bei der Fertigung von Tufting-Teppichen wird ein Faden (Polmaterial) durch ein Trägergewebe getuftet,d.h. gezogen und anschlie-Bend durch Aufbringen eines Bindemittels fixiert (Vorstrich). Als Bindemittel werden üblicherweise wäßrige Polymerdispersionen, z.B. Styrol-Butadien-Copolymerisate, verwendet. Um die Gebrauchseigenschaften des Bodenbelags zu verbessern, wird ein Belag (Zweitrücken, secondary backing) auf das getuftete Trägergewebe geklebt. Als Klebstoff eignet sich ebenfalls eine wäßrige Polymerdispersion, gegebenenfalls kann diese Polymerdispersion auch mit der Polymerdispersion des Vorstrichs identisch sein. Die Herstellung von Tufting-Teppichen unter Verwendung von Styrol-Butadien-Copolymerisaten ist z.B. in US 5348785 beschrieben. Aus EP-A-753404 ist die Verwendung eines Haftvermittlers zur Erhöhung der Haftung der unterschiedlichen Lagen von Teppichen bekannt. Als Haftvermittler bzw. Klebstoff wird eine Polyethylendispersion verwendet. Derartige Dispersionen sind-sehr teuer. Darüberhinaus ist gemäß EP 753 404 eine weitere Schicht aus Polyethylenpulver notwendig. WO-A-962214 beschreibt ein Verfahren, bei dem ein wäßriger Klebstoff auf die Rückseite eines getufteten Trägergewebes aufgetragen wird, und womit anschließend ein zweitrückengewebe festgeklebt wird. Der Klebstoff kann z.B. eine Styrol-Butadien-Copolymeremulsion sein.

Gewünscht ist eine möglichst hohe Festigkeit des erhaltenen Verbundes aus getufteten Trägergewebe und Zweitrücken bei möglichst geringer Klebstoffmenge.

Ebenfalls gewünscht sind kurze Trocknungszeiten des wäßrigen Klebstoffs, um so hohe Produktionsgeschwindigkeiten zu ermöglichen.

Die bisher bekannten Bodenbeläge oder Verfahren zur Herstellung der Bodenbeläge erfüllen die vorstehenden Anforderungen noch nicht zufriedenstellend.

Aufgabe der vorliegenden Erfindung waren daher ein Bodenbelag und ein Verfahren zur Herstellung eines Bodenbelags, welche die Anforderungen in möglichst hohem Maße erfüllen.

Demgemäß wurde der im Anspruch 9 definierte Bodenbelag, das im Anspruch 1 definierte Verfahren zu seiner Herstellung und der im Anspruch 10 definierte wäßrige Klebstoff, welcher sich für die Herstellung des Bodenbelags eignet, gefunden.

Der Klebstoff enthält als Bindemittel eine wäßrige Dispersion. Die wäßrige Dispersion enthält ein Ethylenpolymer A) und ein radikalisch polymerisiertes Polymer B).

Das Ethylenpolymer enthält mindestens 60 Gew.-%, bevorzugt mindestens 70 Gew.-% Ethylen.

Das Ethylenpolymer A) enthält insbesondere
a₁) 60 bis 99,9 Gew.-%, bevorzugt 70 bis 99,5 Gew.-% und besonders bevorzugt aus 70 bis 95 Gew.-% Ethylen und
a₂) 0,1 bis 40 Gew.-%, bevorzugt 0,5 bis 30 Gew.-% und besonders bevorzugt 5 bis 30 Gew.-% einer ethylenisch ungesättigten Säure und

Ethylenisch ungesättigte Säuren a₂) sind insbesondere Acrylsäure oder Methacrylsäure.

Weitere, mit Ethylen copolymerisierbare Monomere a₃) können z.B. (Meth)acrylsäureester, insbesondere C₁-C₁₀-(Meth)acrylsäureester wie (Meth)acrylsäuremethyl-, -ethyl-, -propyl-, -butyl- oder -ethxylhexylester, (Meth)acrylnitril, (Meth)acrylamid oder Vinylester wie Vinylacetat oder Vinylpropionat sein.

Die Herstellverfahren für die Ethylenpolymeren A sind dem Durchschnittsfachmann bekannt. Die Herstellung derartiger Polymerer erfolgt z.B. durch (Co-)Polymerisation von Ethylen in kontinuierlich betriebenen, rohrförmigen Polymerisationssystemen bei Drükken von 500-5000 bar und Temperaturen von 50-450°C in Gegenwart von radikalisch zerfallenden Polymerisationsinitiatoren.

Die Molekulargewichte betragen im allgemeinen ca. 500-40000 Dalton, insbesondere 5000-20000 (Mₙ). Nach erfolgter Polymerisation kann das Polymer A) vorzugsweise durch Druckemulgierung, gegebenenfalls unter Zusatz von einem Neutralisationsmittel in eine wäßrige Dispersion überführt werden.

Dieses Verfahren der Druckemulgierung von Polyethylen zu wäßrigen (Sekundär) dispersion ist dem Durchschnittsfachmann bekannt.

Als Neutralisationsmittel eignen sich bevorzugt Ammoniak, Diethylamin, Dimethylethanolamin, Diethanolamin etc.

Zur Dispersionsherstellung können auch übliche ionische bzw. nichtionische Emulgatoren mitverwendet werden. Bevorzugt werden dünnflüssige, feinteilige, helle Emulsionen des Polymeren A) mit einem Festgehalt von ca. 20-40 % und einem pH-Wert größer 8 erhalten.

Bei Polymer B handelt es sich um ein Polymer, welches zu mindestens 60 Gew.-%, vorzugsweise mindestens 80 Gew.-% aus Dienen oder Gemischen von Dienen und Vinylaromaten besteht.

Als Vinylaromaten kommen vorzugsweise α-Methylstyrol und Styrol in Betracht. Bevorzugt ist Styrol.

Als Diene seien insbesondere Isopren und Butadien genannt. Bevorzugt ist Butadien.

Das Polymer B) enthält vorzugsweise
b₁) 60 bis 99,9 Gew.-% Vinylaromaten, Diene oder deren Gemische und
b₂) 0,1 bis 20 Gew.-% ethylenisch ungesättigte Säuren, z.B. Acrylsäure, Methacrylsäure oder Itaconsäure.

Besonders bevorzugt beträgt der Gehalt von Verbindungen b₁) 80 bis 99,5 Gew.-% und von b₂) 0,5 bis 10 Gew.-%

Bei Monomeren b₁) handelt es sich insbesondere um Gemische von Vinylaromaten und Dienen im Gewichts-Verhältnis 90 : 10 bis 20 : 80, besonders bevorzugt 80 : 20 bis 40 : 60.

Die Herstellung der Polymeren B) erfolgt vorzugsweise durch Emulsionspolymerisation. Die Monomeren können bei der Emulsionspolymerisation wie üblich in Gegenwart eines wasserlöslichen Initiators und eines Emulgators bei vorzugsweise 30 bis 95°C polymerisiert werden.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxodisulfate, Dibenzoylperoxid, Butylperpivalat, t-Butylper-2-ethylhexanoat, 2,5-Dimethyl-2,5-di(t-butylperoxy)hexan, Cumolhydroperoxid, als auch um Azoverbindungen wie beispielsweise Azobisisobutyronitril, 2,21-Azobis(2-amidinopropan)dihydrochlorid, handeln.

Geeignet sind auch kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure. Ferner eignen sich kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure (Eisen (II) sulfat/Wasserstoffperoxid, wobei anstelle von Ascorbinsäure auch häufig das Natriummetallsalz der Hydroxymethansulfinsäure, Natriumsulfit, Natriumhydrogensulfit oder Natriummetabisulfit und anstelle von Wasserstoffperoxid tert.-Butylhydroperoxid oder Alkalimetallperoxodisulfate und/oder Ammoniumperoxodisulfate angewendet werden.

In der Regel beträgt die Menge der eingesetzten radikalischen Initiatoren, bezogen auf die Gesamtmenge der zu polymerisierenden Monomeren 0,1 bis 3 Gew.-%. Besonders bevorzugt werden Ammoniumund/oder Alkalimetallperoxodisulfate bzw. tert. -Butylhydroperoxid in Kombination mit einem Reduktionsmittel als Initiator eingesetzt.

Die Art und Weise, in der das radikalische Initiatorsystem im Verlauf der erfindungsgemäßen radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Für die Emulsionspolymerisation können üblicherweise bekannte ionische und/oder nichtionische Emulgatoren und/oder Schutzkolloide bzw. Stabilisatoren verwendet werden.

Als derartige grenzflächenaktive Substanzen kommen prinzipiell die als Dispergiermittel üblicherweise eingesetzten Schutzkolloide und Emulgatoren in Betracht. Eine ausführliche Bearbeitung geeigneter Schutzkolloide findet sich in Houben-Weyl, Methoden der organischen Chemie, Band XIV/I, makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen ausschließlich Emulgatoren eingesetzt, deren relative Molekulargewichte im Unterschied zu den Schutzkolloiden üblicherweise unter 1000 liegen. Selbstverständlich müssen im Falle der Verwendung von Gemischen grenzflächenaktiver Substanzen die Einzelstoffkomponenten miteinander verträglich sein, was im Zweifelsfall an Hand weniger Vorversuche überprüft werden kann.

Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; C₈ bis C₃₆), ethoxylierte Mono-, Di- und Tri-Alkylphenole (EO-Grad: bis 50, Alkylrest: C₄ bis C₉), Alkalimetallsalze von Dialkyl-estern der Sulfobernsteinsäure sowie Alkali- und Ammoniumsalze von Alkylsulfaten (Alkylrest: C₈ bis C₁₂), von ethoxyliertem Alkanol (EO-Grad: 4 bis 3, Alkylrest: C₁₂ bis C₁₈), von ethoxylierten Alkylphenolen (EO-Grad: 3 bis 50, Alkylrest: C₄ bis C₉), von Alkylsulfonsäuren (Alkylrest: C₁₂ bis C₁₈) und von Alkylarylsulfonsäuren (Alkylrest: C₉ bis C₁₈).

Weitere geeignete Dispergiermittel sind Verbindungen der allgemeinen Formel II 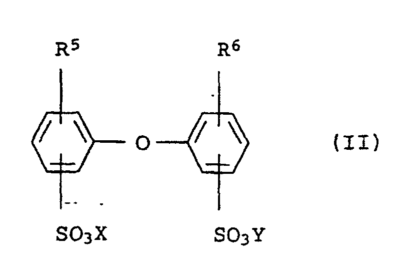 worin R⁵ und R⁶ Wasserstoff oder C₄- bis C₁₄-Alkyl bedeuten und nicht gleichzeitig Wasserstoff sind, und X und-Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Weitere geeignete Emulgatoren finden sich in Houben-Weyl, Methoden der organischen Chemie, Band XIV/1, Makromolekulare Stoffe, Georg Thieme-Verlag, Stuttgart, 1961, Seiten 192 bis 208.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester, tert.-Dodecylmercaptan oder Mercaptoessigsäure.

Die wäßrige Dispersion der Polymeren A) und B) kann in einfacher Weise durch Mischen der wäßrigen Dispersion des Ethylenpolymeren A) mit der wäßrigen Dispersion des Polymeren B) erhalten werden.

Der Gewichtsanteil des Polymeren A) beträgt 0,5 bis 50 Gew.-%, bevorzugt 0,5 bis 20 Gew.-%, besonders bevorzugt 1 bis 10 Gew.-%, bezogen auf die Gewichtssumme A) + B). Entsprechend beträgt der-Anteil des Polymeren B) vorzugsweise 99,5 bis 50 Gew.-%, bevorzugt 99,5 bis 80 gew.-% und besonders bevorzugt 99 bis 90 Gew.-%.

Der Klebstoff enthält vorzugsweise zusätzlich einen Verdicker. Verdicker sind Hilfsmittel, welche die Viskosität erhöhen.

Der Gewichtsanteil des Verdickers beträgt im allgemeinen 0,1 bis 5, vorzugsweise 0,5 bis 3 Gew.-Teile, besonders bevorzugt 0,8 bis 2 Gew.-Teile (trocken, bezogen auf 100 Gew.-Teile der Gewichtssumme von A) und B).

Als Verdicker kommen die bekannten Verdicker, z.B. Polyurethanverdicker, Cellulose, Kieselsäure, Silikate (z.B. Smectide), Metallseifen, Kasein, Stärke, Gelatine, Polyvinylalkohol und Polyvinylpyrrolidon, in Betracht.

Als Verdicker besonders geeignet sind im Rahmen der vorliegenden Erfindung radikalisch polymerisierte Polymere von ethylenisch ungesättigten Verbindungen. Bevorzugt sind Polymere, die zu über 50 Gew.-% aus ethylenisch ungesättigten Säuren, ethylenisch ungesättigten Amiden oder deren Gemische aufgebaut sind.

Als ethylenisch ungesättigte Säure genannt seien Acrylsäure, Methacrylsäure, Itaconsäure. Besonders bevorzugt sind Acrylsäure oder Methacrylsäure. Als Amide genannt seien insbesondere Acrylamid oder Methacrylamid.

Besonders bevorzugt besteht das Polymer zu mindestens 70 Gew.-%, ganz besonders bevorzugt zu mindestens 90 Gew.-% aus den ethylenisch ungesättigten Säuren und/oder Amiden.

Insbesondere enthält das Polymer 60 bis 100 Gew.-%, vorzugsweise 80 bis 99 Gew.-% ethylenisch ungesättigte Säuren und 0 bis 40 Gew.-%, vorzugsweise 1 bis 20 Gew.-% ethylenisch ungesättigter Amide.

Der Verdicker liegt vorzugsweise in Form einer wäßrigen Dispersion, gegebenenfalls mit einem Gehalt von organischen Hilfslösemitteln vor. Zur Dispergierung des Verdickers in Wasser können Dispergierhilfsmittel mitverwendet werden. Die Verdicker können aber auch (z.B. als Pulver) direkt in die wäßrige Dispersion der Polymeren A) oder B) gegeben werden.

Der Verdicker, bzw. die wäßrige Dispersion des Verdickers, kann in einfacher Weise zu der wäßrigen Dispersion des Bindemittels gegeben werden.

Der Klebstoff kann weitere Additive, z.B. Füllstoffe, wie Kreide, Aluminiumtrihydrat oder Bariumsulfat oder organische Füllstoffe, z.B. Polyethylenpulver, Polypropylenpulver enthalten.

Der Gehalt an Füllstoffen beträgt vorzugsweise im allgemeinen 150 bis 400 Gew.-Teile, bezogen auf 100 Gew.-Teile der Summe A) + B). Ein Vorteil der vorliegenden Erfindung ist, daß der Gehalt an Füllstoffen vorzugsweise kleiner als 200 Gew.-Teile, insbesondere kleiner 100 Gew.-Teile oder gar kleiner 50 Gew.-Teile ist.

Die Klebstoffe benötigen im Gegensatz zu bisherigen Klebstoffen keine bzw. weniger Füllstoff. Auch ohne Füllstoff werden hohe Festigkeiten und eine gute Haftung im Bodenbelag erzielt.

Der mehrlagig aufgebaute Bodenbelag besteht vorzugsweise aus einem textilen Trägergewebe, durch das Fäden getuftet sind. Das Trägergewebe besteht meist aus Polypropylen oder Polyester. Bei den Fäden handelt es sich z.B. um Polyamid-, Polypropylen-, Polyesterfäden oder Naturfasern. Zur Fixierung der Fäden im Trägergewebe wird im allgemeinen Bindemittel, z.B. ein Styrol-Butadien Copolymerisat, auf die Rückseite des getufteten Trägergewebes aufgebracht (Vorstrich). Der Vorstrich wird üblicherweise als wäßrige Dispersion, gegebenenfalls mit Füllstoffen wie Kreide, Aluminiumtrihydrat, Bariumsulfat oder organische Füllstoffe, z.B. Polyethylenpulver gefüllt, aufgebracht. Der Vorstrich kann auch Antistatika und weitere Flammschutzmittel enthalten, wie z.B. Phosphorsäureesterderivate und Salze niederer Carbonsäure mit hygroskopischen Eigenschaften.

Auf den Vorstrich, welcher getrocknet oder naß sein kann, wird dann der Klebstoff aufgebracht. Die Auftragsmenge beträgt im allgemeinen 50 bis 1500, vorzugsweise bis 1000 g/m², besonders bevorzugt 50 bis 500 g (trocken, d.h. ohne Wasser).

Der Klebstoff wird beim Auftragen vorzugsweise geschäumt, um durch die Volumenerhöhung eine bessere Verteilung auf der Oberfläche zu gewährleisten.

Danach kann die Verklebung mit dem Zweitrücken erfolgen. Die Klebstoffe trocknen sehr schnell. Als Zweitrücken kommen z.B. textile Flächengebilde aus natürlichen oder synthetischen Materialien, z.B. Polyestervliese, oder auch Nadelvliese in Betracht. Bevorzugt handelt es sich um Vliese aus gewebten oder ungewebten Fasern oder Nadelvliese.

Die erhaltenen mehrlagigen Bodenbeläge zeichnen sich durch eine sehr gute Haftung der Schichten, d.h. insbesondere des Zweitrükkens am getufteten, mit Vorstrich verfestigten Trägergewebes aus.

### Beispiele

### Herstellung von Bodenbelägen

Ein getuftetes Trägergewebe wurde mit einem Vorstrich versehen und getrocknet. Auf das erhaltene vorgestrichene Trägergewebe wurde Klebstoff aufgetragen das Gewebe mit einem textilen Zweitrücken kaschiert und getrocknet. Die Auftragsmengen in g/m² sind jeweils in den Tabellen angegeben.

In den einzelnen Versuchen wurden folgende wäßrige Vorstriche und Klebstoffe verwendet:

**Tabelle 1:**

| | Bestandteile | Gew.-Teile (trocken) |
|---|---|---|
| Vorstrich 1 | SN LD 611 | 100 |
| | Kreide W 12 | 500 |
| | Latekol D | 0,2 |
| | Feststoffgehalt 78 % | |
| Vorstrich 2 | SN LD 791 | 100 |
| | Latekol D | 0,2 |
| Vorstrich 3 | SN LD 791 | 100 |
| | Kreide W 12 | 800 |
| | Latekol D | 0,2 |
| | Feststoffgehalt 78 % | |
| Klebstoff 1 | SN LD 611 | 100 |
| | Kreide W 12 | 250 |
| | Latekol D | 0,2 |
| | Feststoffgehalt 78 % | |
| Klebstoff 2 | SN LD 611 | 95 |
| | Poligen WE 3 | 5 |
| | Collacral HP | 1,0 |
| | Feststoffgehalt 50 % | |
| Klebstoff 3 | SN LD 611 | 90 |
| | Polygen W3 | 10 |
| | Collacral HP | 1 |
| | Feststoffgehalt 47,5 % | |
| Klebstoff 4 | SN LD 611 | 100 |
| | Kreide W 12 | 250 |
| | Latekol D | 0,2 |
| | Feststoffgehalt 75 % | |
| Klebstoff 5 | SN LD 611 | 100 |
| | Latekol D | 0,2 |
| | Feststoffgehalt 53 % | |
| Klebstoff 6 | SN LD 611 | 95 |
| | Polygen W3 | 5 |
| | Latekol D - | 1 |
| Klebstoff 7 - | SN LD 611 - - | 90 |
| | Polygen W3 - | 10 |
| | Latekol D | 1 |

Bedeutungen der Bezeichnungen:
SN LD 611: Styrofan® LD 611, Butadien-Styrol-Copolymer, Ethylen
Poligen® WE 3: Ethylen-acrylsäure Copolymer
Kreide W 12: Calcicol W 12 von Alpha Calcit
Collacral®: Verdicker, Acrylsäure-Acrylamid-Copolymer
Latekol® D: Verdicker, Polyacrylsäure

### Anwendungstechnische Prüfungen

Es wurde die Trennfestigkeit zwischen dem vorgestrichenen Trägergewebe und dem Zweitrücken ermittelt. Die Trennfestigkeit (trocken) wurde bei 23°C und 50 % relativer Luftfeuchtigkeit mit einer Zugsprüfmaschine der Firma Zwick (Ulm, Deutschland) vom Typ 1425 in N/5 cm bestimmt. Angegeben ist jeweils die mittlere Kraft (F) und die maximale Kraft (Fmax). Zusätzlich wurde die Trennfestigkeit des nassen Verbundes nach 12stündiger Lagerung in Wasser bestimmt (naß).

**Tabelle 2:**

| Trennfestigkeit (5/32 Wollfaser getuftet in gewebtes Polypropylen (900 g/m²); Zweitrücken: Polypropylennadelvlies, 375 g/m²) | | | | | | |
|---|---|---|---|---|---|---|
| | Auftragsmenge (trocken) | | trocken | | naß | |
| | Vorstrich | Klebstoff | F | F max | F | F max |
| Vorstrich 1, Kleber 4*) | 650 | 800 | 39,2 | 54,9 | 22,3 | 27,1 |
| Vorstrich 1, Kleber 2 | 650 | 230 | 44,6^{**)} | 64,6^{**)} | 33,1 | 37,9 |
| Vorstrich 1, Kleber 2 | 650 | 180 | 72,9 | 83,0 | 50,4 | 35,5 |
| Vorstrich 1, Kleber 3 | 650 | 230 | 45,6^{**)} | 73,0^{**)} | 43,4 | 53,2 |
| Vorstrich 1 Kleber 3 | 650 | 180 | 63,2 | 78,2 | 38,4 | 45,9 |
| Vorstrich 2, Kleber 2 | 100 | 230 | 46,4^{**)} | 64,9^{**)} | 42,8 | 53,6 |
| Vorstrich 1, Kleber 5^{*)} | 650 | 230 | 42,1 | 53,1 | - | - |
| Vorstrich 1 Kleber 7 | 650 | 230 | 41,9^{**)} | 65,5^{**)} | 44,2 | 52,5 |

| | | | | | | |
|---|---|---|---|---|---|---|
| *) zum Vergleich | | | | | | |
| **) getuftete Fäden wurden aus dem Trägergewebe gezogen | | | | | | |

**Tabelle 3:**

| Trennfestigkeit (1/8 Polyamiolfaser getuftet in gewebtes Polypropylen (625 g/m²); Zweitrücken Polypropylen-Nadelvlies 375 g/m² | | | | | | |
|---|---|---|---|---|---|---|
| | Auftragsmenge (trocken) | | trocken | | naß | |
| | Vorstrich | Klebstoff | F | F max | F | F max |
| Vorstrich 1, Kleber 2 | 650 | 230 | 63, | 68,1 | 28,9 | 34,9 |
| Vorstrich 2, Kleber 2 | 100 | 230 | 100,1 | 107,7 | 33,5 | 39,9 |

**Tabelle 4:**

| Trennfestigkeit (5/32 Polypropylenfaser getuftet in Polypropylen (650 g/m²); Zweitrücken Polypropylen-Nadelvlies 330 g/m² | | | | | | |
|---|---|---|---|---|---|---|
| | Auftragsmenge (trocken) | | trocken | | naß | |
| | Vorstrich | Klebstoff | F | F max | F | F max |
| Vorstrich 3, Kleber 4*⁾ | 780 | 550 | 10,7 | 16,3 | 6,4 | 7,7 |
| Vorstrich 3, Kleber 2 | 780 | 160 | 34,0 | 40,8 | 21,6 | 26,3 |
| Vorstrich 2, Kleber 2 | 90 | 160 | 24,1 | 27,7 | 10,9 | 12,7 |

Weiterhin wurde die Trocknungsgeschwindigkeit bestimmt.
10,5 g Klebstoff 1 wurde verglichen mit
4,6 g Klebstoff 6 (gleicher Polymergehalt)

Die Trocknung erfolgte bis zur Gewichtskonstanz
Klebstoff 1: trocken nach 75 Minuten
Klebstoff 2: trocken nach 50 Minuten

Bei Produktion in technischem Maßstab kann daher unter gleichen Bedingungen eine um 30 % größere Geschwindigkeit erreicht werden.

## Patentansprüche

1. Verfahren zur Herstellung eines mehrlagig aufgebauten textilen Bodenbelages, **dadurch gekennzeichnet, daß** ein Klebstoff auf die Rückseite eines getufteten Trägergewebes aufgetragen wird und das getuftete Trägergewebe mit einem textilen Flächengebilde aus natürlichen oder synthetischen Fasern als Zweitrücken verklebt wird und der Klebstoff als Bindemittel eine wäßrige Dispersion eines Gemischs aus einem Polymer A), welches zu mindestens 60 Gew.-% aus Ethylen aufgebaut ist und einem Polymer B), welches zu mindestens 60 Gew.-% aus Dienen oder Gemischen von Dienen und Vinylaromaten aufgebaut ist, enthält,
wobei der Gewichtsanteil von Polymer A) 0,5 bis 50 Gew.-% und der von B) 50 bis 99,5 Gew.-%, bezogen auf die Summe von A) und B), beträgt.

2. Verfahren gemäß Anspruch 1, **dadurch gekennzeichnet, daß** Polymer A) als Aufbaukomponenten 60 bis 99,9 Gew.-% Ethylen und 0,1 bis 40 Gew.-% einer ethylenisch ungesättigten Säure, bezogen auf Polymer A), enthält

3. Verfahren gemäß einem der Ansprüche 1 oder 2, **dadurch gekennzeichnet, daß** Polymer B) als Aufbaukomponenten 60 bis 99,9 Gew.-% Vinylaromaten, Diene oder deren Gemische und 0,1 bis 20 Gew.-% einer ethylenisch ungesättigten Säure, bezogen auf Polymer B), enthält.

4. Verfahren gemäß einem der Ansprüche 1 bis 3, **dadurch gekennzeichnet, daß** der Klebstoff zusätzlich einen Verdicker enthält.

5. Verfahren gemäß Anspruch 4, **dadurch gekennzeichnet, daß** es sich bei dem Verdicker um ein Copolymer von ethylenisch ungesättigten Verbindungen handelt, wobei es sich bei mindestens 50 Gew.-% der ethylenisch ungesättigten Verbindungen um ethylenisch ungesättigte Säuren, ethylenisch ungesättigte Amide oder deren Gemische handelt

6. Verfahren gemäß einem der Ansprüche 1 bis 5, **dadurch gekennzeichnet, daß** der Klebstoff weniger als 200 Gew.-Teile, bezogen auf 100 Gew.-Teile der Summe aus A) und B) eines Füllstoffs enthält.

7. Verfahren gemäß einem der Ansprüche 1 bis 6, **dadurch gekennzeichnet, daß** der Klebstoff keinen Füllstoff enthält

8. Verfahren zur Herstellung eines textilen Bodenbelags gemäß einem der Ansprüche 1 bis 7, **dadurch gekennzeichnet, daß** der Klebstoff in einer Menge von 20 g bis 1000 g (trocken) pro m2 auf eine der Lage aufgetragen wird und die Lagen miteinander verklebt werden.

9. Mehrlagig aufgebauter textiler Bodenbelag erhältlich durch ein Verfahren gemäß einem der Ansprüche 1 bis 8.

10. Wäßriger Klebstoff zur Verwendung in den Verfahren gemäß einen der Ansprüche 1 bis 8, enthaltend als Bindemittel eine wäßrige Dispersion eines Gemischs aus einem Polymer A), welches zu mindestens 60 Gew.-% aus Ethylen aufgebaut ist und einem Polymer B), welches zu mindestens 60 Gew.-% aus Dienen oder Gemischen von Dienen und Vinylaromaten aufgebaut ist, wobei der Gewichtsanteil von Polymer A) 0,5 bis 50 Gew % und der von B) 50 bis 99,5 Gew %, bezogen auf die Summe von A) und B) beträgt, und einen Verdicker, wobei es sich bei dem Verdicker um ein Copolymer von ethylenisch ungesättigten Verbindungen handelt, und es sich bei mindestens 50 Gew.-% der ethylenisch ungesättigten Verbindungen um ethylenisch ungesättigte Säuren, ethylenisch ungesättigte Amide oder deren Gemische handelt.

## Claims

1. A process for producing a textile floorcovering having more than one layer, which comprises applying an adhesive to the reverse side of a tufted backing fabric, and adhesively bonding the tufted backing fabric to a textile sheet made from natural or synthetic fibers, as secondary backing, and which comprises using, as the adhesive, an adhesive which comprises, as binder, an aqueous dispersion of a mixture made from a polymer A) at least 60% by weight of which is composed of ethylene, and from a polymer B), at least 60% by weight of which is composed of dienes, or of a mixture of dienes and vinylaromatics, where the proportion by weight of polymer A) is from 0.5 to 50%, and that of polymer B) is from 50 to 99.5%, based on the total of A) and B).

2. A process as claimed in claim 1, wherein the structural components present in the polymer A) are from 60 to 99.9% by weight of ethylene and from 0.1 to 40% by weight of an ethylenically unsaturated acid, based on polymer A).

3. A process as claimed in claim 1 or 2, wherein the structural components present in the polymer B) are from 60 to 99.9% by weight of vinylaromatics, dienes or mixtures of these and from 0.1 to 20% by weight of an ethylenically unsaturated acid, based on polymer B).

4. A process as claimed in any one of claims 1 to 3, wherein the adhesive also comprises a thickener.

5. A process as claimed in claim 4, wherein the thickener is a copolymer of ethylenically unsaturated compounds at least 50% by weight of which are ethylenically unsaturated acids, ethylenically unsaturated amides or mixtures of these.

6. A process as claimed in any one of claims 1 to 5, wherein the adhesive comprises less than 200 parts by weight, based on 100 parts by weight of the total of A) and B), of a filler.

7. A process as claimed in any one of claims 1 to 6, wherein no filler is present in the adhesive.

8. A process for producing a textile floorcovering as claimed in any one of claims 1 to 7, which comprises applying from 20 g to 1000 g (dry) per m² of adhesive to one of the layers and adhesively bonding the layers to one another.

9. A textile floorcovering having more than one layer, obtainable by a process as claimed in any one of claims 1 to 8.

10. An aqueous adhesive comprising, as binder, an aqueous dispersion of a mixture made from a polymer A), at least 60% by weight of which is composed of ethylene, and from a polymer B), at least 60% by weight of which is composed of dienes or of a mixture of dienes and vinylaromatics, where the proportion by weight of polymer A) is from 0.5 to 50% and that of polymer B) is from 50 to 99.5%, based on the total of A) and B), and comprising a thickener, where the thickener is a copolymer of ethylenically unsaturated compounds at least 50% by weight of which are ethylenically unsaturated acids, ethylenically unsaturated amides or mixtures of these.

## Revendications

1. Procédé de fabrication d'un revêtement de sol textile à structure multicouche, **caractérisé en ce qu'**un adhésif est appliqué sur le dos d'un tissu de support tufté, et que le tissu de support tufté est collé avec un article plat à base de fibres naturelles ou synthétiques en tant que deuxième dossier, et que l'adhésif contient comme liant une dispersion aqueuse d'un mélange constitué d'un polymère A), qui est constitué à au moins 60% en poids d'éthylène, et d'un polymère B), qui est constitué à au moins 60% en poids de diènes ou de mélanges de diènes et des vinylaromatiques, et où la fraction pondérale du polymère (A) est de 0,5 à 50% en poids et celle de B) de 50 à 99,5% en poids, par rapport à la somme de A) et B).

2. Procédé selon la revendication 1, **caractérisé en ce que** le polymère A) contient en tant que composants constitutifs de 60 à 99,9% en poids d'éthylène et de 0,1 à 40% en poids d'un acide éthyléniquement insaturé, par rapport au polymère A).

3. Procédé selon l'une quelconque des revendications 1 et/ou 2, **caractérisé en ce que** le polymère B) contient en tant que composants constitutifs de 60 à 99,9% en poids de vinylaromatiques, des diènes ou de leurs mélanges, et de 0,1 à 20% en poids d'un acide éthyléniquement insaturé, par rapport au polymère B).

4. Procédé selon l'une des revendications 1 à 3, **caractérisé en ce que** l'adhésif contient en outre un épaississant.

5. Procédé selon la revendication 4, **caractérisé en ce que** l'épaississant est un copolymère de composés éthyléniquement insaturés, et **en ce qu'**au moins 50% en poids des composés éthyléniquement insaturés sont des acides éthyléniquement insaturés, des amides éthyléniquement insaturés, ou leurs mélanges.

6. Procédé selon l'une quelconque des revendications 1 à 5, **caractérisé en ce que** l'adhésif contient moins de 200 parties en poids, par rapport à 100 parties en poids de la somme de A) et B), d'une matière de remplissage.

7. Procédé selon l'une quelconque des revendications 1 à 6, **caractérisé en ce que** l'adhésif ne contient pas de matière de remplissage.

8. Procédé de fabrication d'un revêtement de sol textile selon l'une quelconque des revendications 1 à 7, **caractérisé en ce que** l'adhésif est appliqué en une quantité de 20 g à 1000 g (à sec) par m² sur l'une des couches, et que les couches sont collées ensemble.

9. Revêtement textile à structure multicouche que l'on peut obtenir par un procédé selon l'une quelconque des revendications 1 à 8.

10. Additif aqueux à utiliser dans le procédé selon l'une quelconque des revendications 1 à 8, contenant en tant que liant une dispersion aqueuse d'un mélange constitué d'un polymère A), qui est constitué à au moins 60% en poids d'éthylène, et d'un polymère B), qui est constitué à au moins 60% en poids de diènes ou de mélanges de diènes et de vinylaromatiques, et où la fraction pondérale du polymère A) est de 0,5 à 50% en poids et celle du polymère B) de 50 à 99,5% en poids, par rapport à la somme de A) et B), et un épaississant, l'épaississant étant un copolymère de composés éthyléniquement insaturés, et au moins 50% en poids des composés éthyléniquement insaturés sont des acides éthyléniquement insaturés, des amides éthyléniquement insaturés, ou leurs mélanges.
